# EUROPEAN PATENT APPLICATION

(11) **EP 4 223 447 A1**
(43) Date of publication of application: **09.08.2023**
(21) Application number: 22216910.4
(22) Date of filing: 28.12.2022
(51) Int. Cl.: B23K 26/03, B23K 26/046, B23K 26/0622, B23K 26/082, B23K 26/36

(54) **LASER PROCESSING DEVICE, CONTROL METHOD, STORAGE MEDIUM, AND PRODUCT MANUFACTURING METHOD**

(30) Priority: 17.01.2022 JP 2022004887
(71) Applicant: CANON KABUSHIKI KAISHA, Tokyo 146-8501 (JP)
(72) Inventor: MORIMOTO, Hiroyuki, Tokyo (JP)
(74) Representative: WESER & Kollegen Patentanwälte PartmbB

(57) **Abstract**

A laser processing device includes an optical scanning unit that scans laser light; a condenser lens that condenses the laser light onto a workpiece; a plasma light sensor that detects plasma light from the workpiece; and a control unit configured to generate processing position data for the laser light for processing the workpiece, wherein the control unit causes the optical scanning unit to scan the laser light and causes the plasma light sensor to acquire a detection result of detecting the plasma light from the workpiece, and the control unit generates the processing position data for the laser light for processing the workpiece on the basis of the detection result.

## Description

### BACKGROUND

### Field

The present disclosure relates to a laser processing device, a control method, a storage medium, and a product manufacturing method.

### Description of the Related Art

A conventional laser processing device converts three-dimensional (3D) computer-aided design (CAD) data indicating a stereoscopic shape of a workpiece in advance into processing point data dedicated to the device, and realizes stereoscopic processing by controlling the device. Laser light emitted from a laser oscillator is condensed at a focal position on the workpiece having the stereoscopic shape by a plurality of mirrors such as a Galvano scanner or condenser lenses.

In this case, a control unit controls an optical scanning unit, a laser oscillator, and the like on the basis of the three-dimensional CAD data related to the shape of the workpiece, or the like, and performs desired processing on the workpiece.

For example, Japanese Patent Laid-Open No. 2002-307176 discloses a configuration in which femtosecond laser light is applied, a plasma light intensity generated in a workpiece is detected, and on the basis of the detected output, the workpiece is slightly moved to a position at which the lowest laser light intensity is obtained.

With conventional laser processing device, there is an issue that a workpiece cannot be accurately laser-processed if there is no 3D CAD data or there is only rough 3D CAD data. That is, if there is no highly accurate three-dimensional CAD data, laser light cannot be correctly condensed on the workpiece, which thus causes significant deterioration in processing quality. Even if three-dimensional CAD data is available, there is an issue that the processing quality deteriorates if a posture of the workpiece changes or is indefinite.

### SUMMARY

Embodiments of the present disclosure provide a laser processing device and the like that can process a workpiece with high accuracy.

According to the present disclosure, there is provided a laser processing device including an optical scanning unit that scans laser light; a condenser lens that condenses the laser light onto a workpiece; a plasma light sensor that detects plasma light from the workpiece; and a control unit configured to generate processing position data for the laser light for processing the workpiece, wherein the control unit causes the optical scanning unit to scan the laser light and causes the plasma light sensor to acquire a detection result of detecting the plasma light from the workpiece, and the control unit generates the processing position data for the laser light for processing the workpiece on the basis of the detection result.

Further features of the present disclosure will become apparent from the following description of embodiments with reference to the attached drawings.

### BRIEF DESCRIPTION OF THE DRAWINGS

Fig. 1 is a block diagram showing the overall configuration of a laser processing device of an embodiment.
Fig. 2 is a flowchart showing an example of a control method using the laser processing device of the embodiment.
Fig. 3 is a diagram for describing an example of plasma light generation and detection.
Fig. 4 is a diagram in which a plurality of optical scanning trajectories are set for a workpiece in step S203.
Fig. 5 is a diagram showing a workpiece 104 in the vicinity of an intersection shown in Fig. 4 from a direction in which a surface of the workpiece faces.
Fig. 6 is a diagram showing a procedure for generating processing point data from a sensor detection signal described with reference to Fig. 5 in step S205.

### DESCRIPTION OF THE EMBODIMENTS

Hereinafter, with reference to the accompanying drawings, favorable modes of the present disclosure will be described using Embodiments. In each diagram, the same reference signs are applied to the same members or elements, and duplicate description will be omitted or simplified.

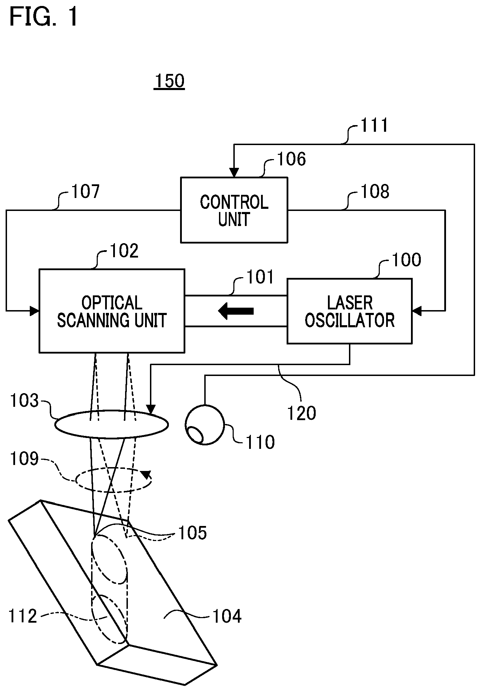

Fig. 1 is a block diagram showing the overall configuration of a laser processing device according to an embodiment of the present disclosure.

A laser processing device 150 includes a laser oscillator 100 as a laser light source, an optical scanning unit 102 that scans laser light, a condenser lens 103 that condenses the laser light, a control unit 106, a plasma light sensor 110, and the like. Laser light 101 emitted from the laser oscillator 100 is applied along a predetermined track by the optical scanning unit 102 and is condensed by the condenser lens 103 at a focal position 105 on a workpiece 104 having a stereoscopic shape.

The laser oscillator 100 has an external interface capable of controlling an oscillation timing, and can turn on or off oscillation and modulate a light intensity according to a laser oscillation timing signal 108 supplied from the control unit 106 or the like.

The optical scanning unit 102 includes, for example, a plurality of mirrors such as a Galvano scanner and lenses, and can change a reflection direction and spread of the laser light 101 according to a command value for processing point data 107 as processing position data to move a focal position 105.

The spread of laser light can be controlled by changing a position of the condenser lens 103 or a position of the workpiece 104. The control unit 106 supplies the condenser lens 103 with a lens control signal 120 for controlling a position of the condenser lens 103. The lens control signal 120 changes in conjunction with the processing point data 107.

The control unit 106 generates the processing point data 107 and a laser oscillation timing signal 108 and controls the optical scanning unit 102 and the laser oscillator 100. The control unit 106 has a built-in CPU as a computer, and functions as control means for controlling an operation of each unit of the entire laser processing device on the basis of a computer program stored in a memory (not shown) as a storage medium.

The optical scanning track 109 is a track along which the focal position 105 is moved as a result of the control unit 106 operating the optical scanning unit 102 according to the processing point data 107, and processing of the workpiece progresses along the track to form a through-hole 112. The plasma light sensor 110 is a plasma light sensor for detecting plasma light emitted from a workpiece, which will be described later, and sends a sensor detection signal 111 regarding a detection state of the plasma light to the control unit 106.

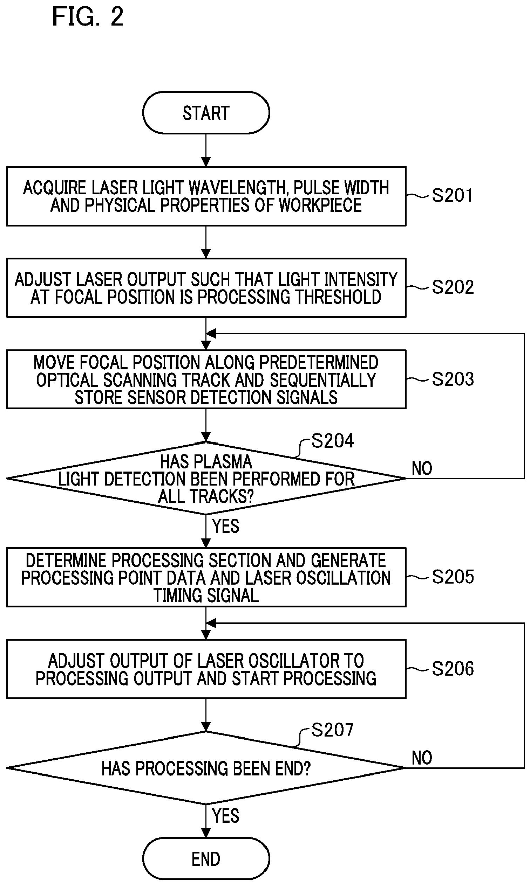

Next, a series of flows in the present embodiment will be described using Fig. 2.

Fig. 2 is a flowchart showing an example of a control method using the laser processing device of the embodiment of the present disclosure. An operation in each step of the flowchart in Fig. 2 is performed by the computer in the control unit 106 executing the computer program stored in the memory.

In step S201 in Fig. 2, characteristics data related to a wavelength and a pulse width of laser light in the laser processing device 150 and physical properties of a workpiece are obtained from a memory (not shown) or an external database.

Next, in step S202, an output of the laser oscillator is adjusted on the basis of the characteristics data regarding the wavelength and the pulse width of the laser light and the physical properties of the workpiece acquired in step S201, and thus the light intensity at the focal position is adjusted to be a processing threshold for the workpiece.

Here, the processing threshold means the minimum light intensity at which processing of the workpiece is started by the laser light, and is adjusted according to the wavelength or the pulse width of the laser light and the physical properties of the workpiece acquired in step S201 as described above.

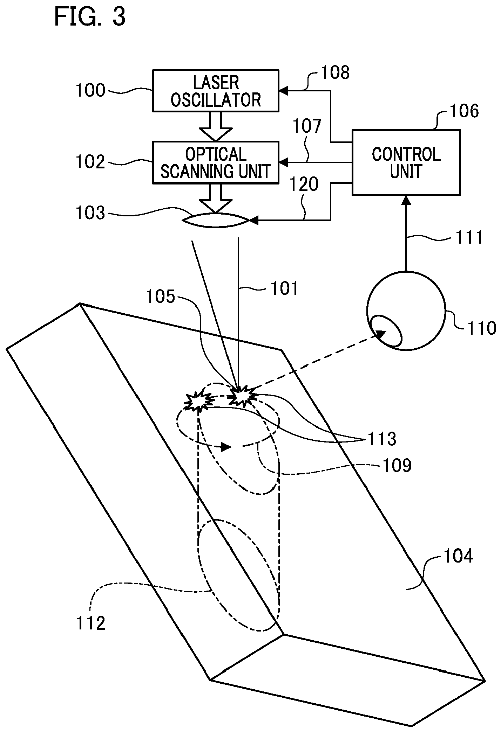

Fig. 3 is a diagram for describing an example of plasma light generation and detection. As shown in Fig. 3, if the light intensity at the focal position 105 is equal to or more than the processing threshold, the plasma light 113 is generated due to reaction between the laser light and the workpiece.

Next, in step S203, the optical scanning unit is operated to move the focal position 105 along the optical scanning track 109, a detection timing of the plasma light 113 is acquired on the basis of the sensor detection signal 111, and the sensor detection signal 111 is stored in a time series in the order of the optical scanning track 109.

That is, in a state in which the light intensity at the focal position of the laser light in the condenser lens is adjusted to be the processing threshold for the workpiece, the workpiece is scanned by the optical scanning unit, and the plasma light sensor detects plasma light emitted from the workpiece. The optical scanning track is set according to a shape of the through-hole 112 to be processed, an output of the laser oscillator, conditions of the optical scanning unit, and the like.

For example, in Fig. 3, the optical scanning track 109 intersects a surface of the workpiece 104 at two points, and at the intersection, the focal position and the surface of the workpiece match and the light intensity is the processing threshold, and thus plasma light 113 is emitted. However, when the intersection is deviated, the surface of the workpiece 104 is irradiated with the laser light diverging from the focal position, so that the light intensity drops below the processing threshold and the plasma light is not generated.

On the other hand, the plasma light 113 generated at the intersection is detected by plasma light sensor 110 and the sensor detection signal 111 is sent to the control unit 106.

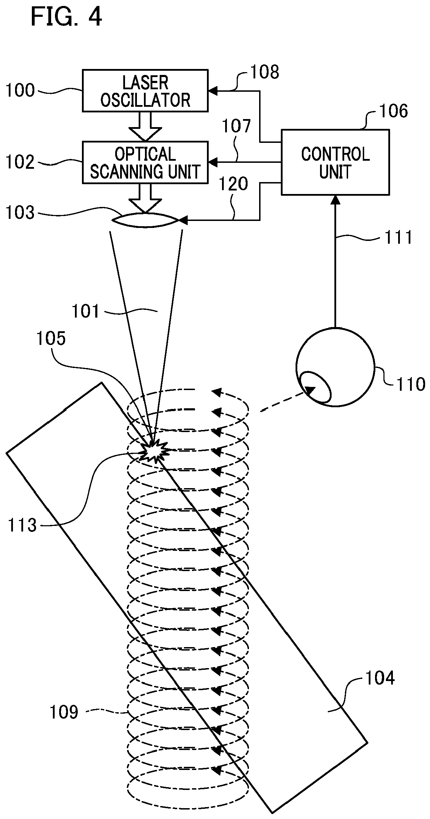

Fig. 4 is a diagram in which a plurality of optical scanning trajectories are set for the workpiece in step S203. A plurality of optical scanning trajectories 109 are set at a predetermined pitch, for example, from top to bottom of the workpiece 104, and the optical scanning unit is operated to sequentially move the focal position 105 along all the optical scanning trajectories.

As shown in Fig. 3, at the intersection of the optical scanning track and the surface of the workpiece, the focal position and the surface of the workpiece match and the light intensity is the processing threshold, and thus plasma light is emitted. The plasma light 113 generated at the intersection is detected by the plasma light sensor 110 and the sensor detection signal 111 is sent to the control unit 106.

In step S204, it is determined whether or not the plasma light detection operation has been performed for all trajectories. If a determination result is No, the flow returns to step S203 and the process is repeatedly performed. If a determination result is Yes, the flow proceeds to step S205.

In step S205, processing point data for processing the workpiece is generated on the basis of a detection timing of the plasma light. Specifically, on the basis of the plasma light detection timing, in order to control a focal position in the laser oscillator 100, the optical scanning unit 102, or the condenser lens 103 to perform processing, processing point data is generated and a laser oscillation timing signal is also generated.

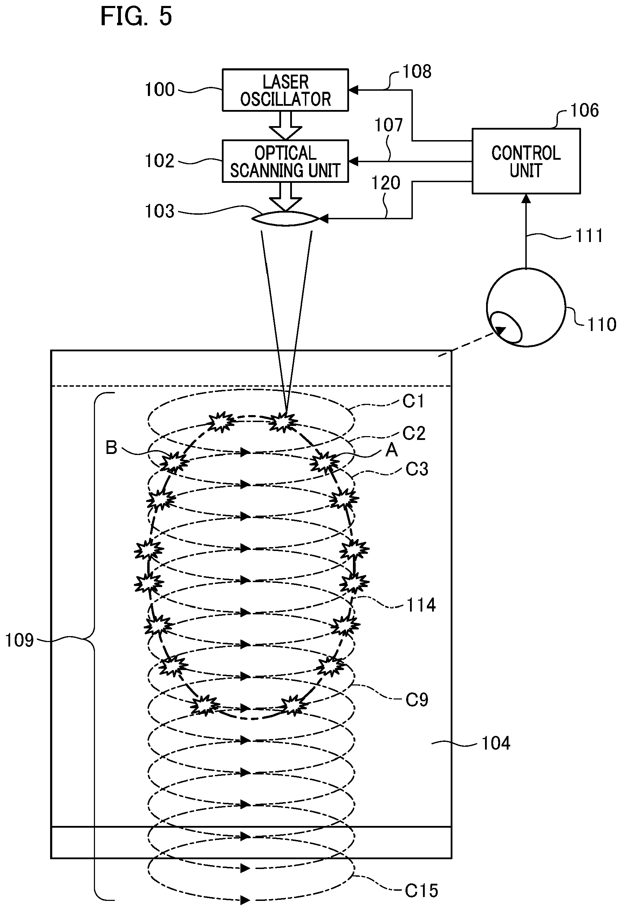

Fig. 5 is a diagram showing the workpiece 104 in the vicinity of the intersection shown in Fig. 4 from a direction in which the surface of the workpiece faces. In Fig. 5, a plurality of optical scanning trajectories C1 to C15 are set. In the optical scanning track, eight optical scanning trajectories C2 to C9 that intersect the surface of the workpiece have a total of 16 intersections, and plasma light is emitted from each of the intersections. For example, in the optical scanning track C3 in Fig. 5, an intersection where the plasma light is first emitted due to movement of the focal position is set as a plasma emission point A.

Thereafter, the focal position enters the inside of the workpiece, and an intersection at which the plasma light is emitted when the focal position matches the surface of the workpiece again is set as a plasma emission point B. Each piece of plasma light from the workpiece is detected by the plasma light sensor 110, converted into the sensor detection signal 111, and sent to the control unit 106.

A connection line 114 that connects all the plasma emission points on the workpiece 104 is a line of which focal positions and the surface of the workpiece 104 match. Therefore, by detecting the plasma light emitted from the workpiece by using a plurality of optical scanning trajectories, a focal position on the workpiece can be determined.

A pitch of a plurality of set optical scanning trajectories is set on the basis of a processing depth for one cycle of the optical scanning track during processing, but may be modified as appropriate according to required processing accuracy and processing tact.

For example, by setting a pitch finer than a processing depth for one cycle of the optical scanning track during processing, it is possible to form a connection line with higher accuracy and achieve highly accurate processing. Conversely, by setting a pitch coarser than a processing depth for one cycle of the optical scanning track during processing, it is possible to reduce the time required to determine a focal position. If a pitch of the optical scanning track is coarsened, interpolation may be performed to generate finer processing point data.

Instead of setting a plurality of optical scanning trajectories as shown in Figs. 4 and 5, a spiral optical scanning track may be used.

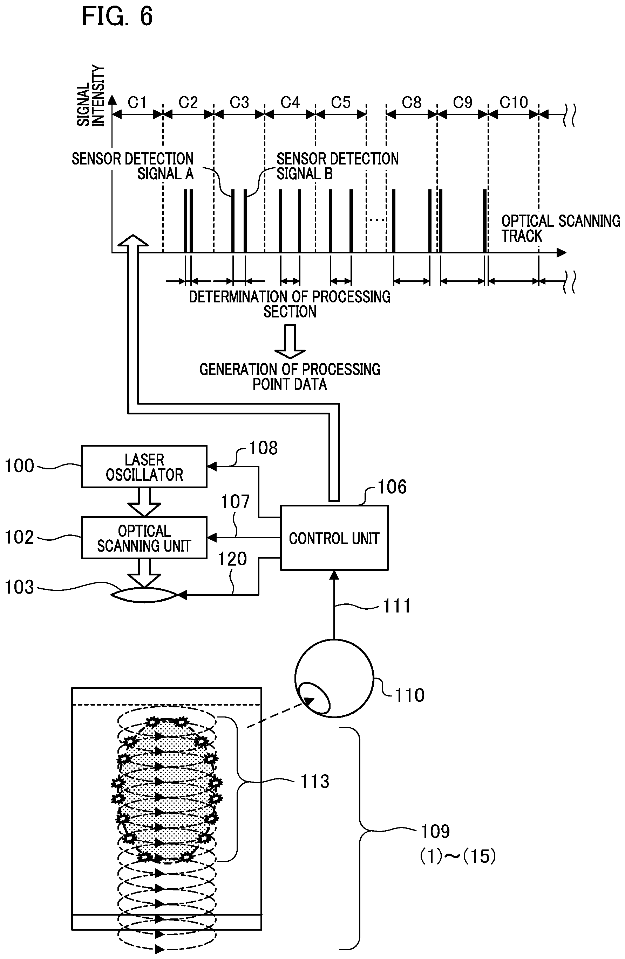

Fig. 6 is a diagram showing a procedure for generating processing point data from the sensor detection signal described in Fig. 5 in step S205.

As described above, in step S203, the control unit 106 stores the sensor detection signal 111 of the plasma light detected by the plasma light sensor 110 in time series in the order of C1 to C15 of the optical scanning track 109. In this case, sensor detection signals corresponding to the plasma emission point A and the plasma emission point B emitted on the optical scanning track C3 shown in Fig. 5 are set as a sensor detection signal A and a sensor detection signal B.

Thereafter, an interval between the sensor detection signal A and the sensor detection signal B corresponding to the plasma emission points for each optical scanning track is gradually expand until the interval matches the cycle of the optical scanning track as the optical scanning track moves from top to bottom of the workpiece.

In this case, the interval between the sensor detection signal A and the sensor detection signal B is a section in which the focal position exists on the surface or inside of the workpiece. Next, after the optical scanning track C10, the focal position is entirely within the workpiece, and thus no plasma light is generated and no sensor detection signal is detected.

As described above, the section connecting the sensor detection signal A and the sensor detection signal B while the sensor detection signal A and the sensor detection signal B are detected and all subsequent sections of the optical scanning track in which the sensor detection signal is not detected are determined as processing sections used for processing.

In step S205, the control unit 106 generates processing point data and a laser oscillation timing signal corresponding to the determined processing section on the basis of the detection timing of the plasma light, and controls at least one of a focal position of the condenser lens, the laser light source, and the light scanning unit.

Therefore, the intensity of the output of the laser oscillator is set to a processing light intensity that is more than the processing threshold. In step S206, the control unit 106 controls at least one of the focal positions in the laser light source, the optical scanning unit, and the condenser lens on the basis of the processing point data such that a through-hole is processed in a state in which the light intensity for processing is set.

The optical scanning track when processing is performed in step S206 is the order of C9 to C2, which is opposite to the order in step S203. That is, the control unit makes the scanning order of the optical scanning unit when generating the processing point data as processing position data different from the scanning order of the optical scanning unit when performing processing. A throughput can be increased by skipping other than C9 to C2.

In step S207, it is determined whether or not the processing has been completed, and if a determination result is No, the flow returns to step S206 and repeats the processing. If a determination result is Yes, the flow in Fig. 2 is ended.

As described above, according to the flow shown in Fig. 2, a processing section is determined from detection signals of the plasma emission point A and the plasma emission point B, and the laser oscillator and the optical scanning unit are controlled to be synchronized with the processing section, and thus processing can be performed in conjunction with a focal position.

Here, steps S202 to S205 function as a control step of generating processing point data by scanning the workpiece and detecting the plasma light emitted from the workpiece in a state in which the light intensity at the focal position is adjusted to be the processing threshold.

Steps S206 and S207 are a processing step of performing processing in a state in which the light intensity at the focal position is more than the processing threshold by controlling at least one of the focal position of the condenser lens, the laser light source, and the light scanning unit.on the basis of the processing point data.

At focal positions other than the processing position, the laser light source may be turned off, or the light intensity may be controlled not to exceed the processing threshold.

The laser oscillator and the optical scanning unit each have their own unique response characteristics, and it may be necessary to correct the generated processing point data or a timing of the laser oscillation timing signal.

Therefore, it is desirable to appropriately adjust a control timing of the laser oscillator or the optical scanning unit based on a plasma light detection timing according to the response characteristics of the laser oscillator or the optical scanning unit. That is, it is desirable that the control unit adjusts a control timing of the laser light source or the optical scanning unit according to the response characteristics of the laser light source or the optical scanning unit.

### <Examples>

Hereinafter, specific examples of parameters in a processing method of the present embodiment will be described.

In the present embodiment, a through-hole having a target diameter of 100 µm was processed in a stainless steel plate having a thickness of 0.3 mm and an inclined surface of 45 degrees by using a femtosecond laser.
First, the output of the laser oscillator was adjusted such that the light intensity at the focal position 105 was 0.1 J/cm2, which is the processing threshold for the stainless steel plate.

Next, 400 optical scanning trajectories were set at a pitch of 0.5 µm from top to bottom of the workpiece. The pitch of the optical scanning trajectories was set on the basis of a processing depth for one cycle of the optical scanning track during processing. The number of optical scanning trajectories was set with reference to an expected length of the through-hole formed in the workpiece.

The diameter of the optical scanning track was set to 85 µm in consideration of the laser condensing diameter with respect to the target diameter of 100 µm. Since a setting range of the optical scanning track in the optical axis direction is 2 mm according to the pitch of the optical scanning trajectories and the number of conditions, a starting position of the optical scanning track was adjusted such that a region where the optical scanning track intersects the surface of the workpiece is not deviated by 2 mm.

Optical scanning was performed with the above set values, and the plasma light sensor detected the plasma light emitted at the intersection between the surface of the workpiece and the optical scanning track to determine the processing section, and the processing point data and the laser oscillation timing signal were generated. Thereafter, the output of the laser oscillator was adjusted to 10 W for processing, and the through-hole was processed by using the processing point data and the laser oscillation timing signal.

The femtosecond laser with the output of 10 W was used as the laser light source, and the laser processing device provided with a biaxial Galvano scanner unit and an optical scanning unit in which a movable lens for adjusting a focal position was combined was configured. The laser processing device includes a movable automatic stage and a jig for fixing a workpiece, and processes the workpiece by using the optical scanning unit and the condenser lens.

The laser processing device also includes a plasma light sensor that detects plasma light emitted from the workpiece and a control unit configured with a personal computer, and the control unit can control the laser oscillator and the optical scanning unit.

As described above, it is possible to provide the processing method and the laser processing device that can realize high-quality processing without deterioration in processing quality even for workpieces without highly accurate 3D CAD data.

A position or a posture of the workpiece can be checked even for workpieces with 3D CAD data, and thus the processing accuracy can be improved. In the present embodiment, there is also an effect in which, since the processing point data is generated by using light from the same laser light source, it is possible to generate highly accurate processing point data compared with measuring a shape by using another laser light source.
The plasma light sensor 110 may be configured to be attachable to and detachable from the laser processing device. A system may be configured in which processing point data of laser light is created on the basis of results of detecting plasma light with a laser device having the plasma light sensor 110, and another laser device without the plasma light sensor 110 uses the processing point data to process the object.

The laser processing device according to the embodiments described above can be used for a product manufacturing method. The product manufacturing method may include a processing step of processing an object (workpiece) by using the laser processing device, and a manufacturing step of further processing the object (workpiece) processed in the processing step to manufacture a predetermined product.

A process for the manufacturing step may include, for example, at least one of processing, transport, inspection, sorting, assembly, and packaging different from the process in the processing step.

In the product manufacturing method of present embodiment, compared with the conventional method, it is possible to manufacture a high-quality product even for a workpiece without 3D CAD data, for example. Even for a workpiece with three-dimensional CAD data, it is possible to perform highly accurate processing after checking a position or a posture of the workpiece, and thus the product manufacturing method is advantageous in one or more of performance, quality, productivity, and production cost of a product.

While the present disclosure has been described with reference to exemplary embodiments, it is to be understood that the disclosure is not limited to the disclosed exemplary embodiments. The scope of the following claims is to be accorded the broadest interpretation to encompass all such modifications and equivalent structures and functions. As a part or the whole of the control according to the embodiments, a computer program realizing the function of the embodiments described above may be supplied to the laser processing device through a network or various storage media. Then, a computer (or a CPU, an MPU, or the like) of the laser processing device may be configured to read and execute the program. In such a case, the program and the storage medium storing the program configure the present disclosure.

This application claims the benefit of Japanese Patent Application No. 2022-004887, filed on January 17, 2022, which is hereby incorporated by reference herein in its entirety.

## Claims

1. A laser processing device comprising:
an optical scanning unit that scans laser light;
a condenser lens that condenses the laser light onto a workpiece;
a plasma light sensor that detects plasma light from the workpiece; and
a control unit configured to generate processing position data for the laser light for processing the workpiece,
wherein the control unit causes the optical scanning unit to scan the laser light and causes the plasma light sensor to acquire a detection result of detecting the plasma light from the workpiece, and
wherein the control unit generates the processing position data for the laser light for processing the workpiece on the basis of the detection result.

2. The laser processing device according to claim 1, wherein
the processing position data is generated on the basis of a detection timing of the plasma light, and is data for performing the processing by controlling at least one of a focal position of the condenser lens, the laser light source, and the light scanning unit.

3. The laser processing device according to claim 1 or 2, wherein
the control unit performs the processing by controlling at least one of the focal position of the condenser lens, the laser light source, and the light scanning unit on the basis of the processing position data.

4. The laser processing device according to any one of claims 1 to 3, wherein
the plasma light sensor detects the plasma light from the workpiece and acquires the detection result while the laser light is scanned by the optical scanning unit in a state in which a light intensity of the laser light at the focal position in the condenser lens is smaller than a light intensity when the workpiece is processed by using the processing position data.

5. The laser processing device according to any one of claims 1 to 4, wherein
in a state in which a light intensity of the laser light at a focal position in the condenser lens is adjusted to be a processing threshold for the workpiece, the light scanning unit scans the laser light, and the plasma light sensor detects the plasma light from the workpiece to acquire the detection result.

6. The laser processing device according to claim 5, wherein
the control unit performs the processing in a state in which the light intensity of the laser light at the focal position in the condenser lens is set to a processing light intensity more than the processing threshold.

7. The laser processing device according to claim 3 or 4, wherein
the control unit adjusts a control timing of the laser light source or the optical scanning unit according to response characteristics of the laser light source or the optical scanning unit.

8. The laser processing device according to any one of claims 3 to 5, wherein
the control unit makes a scanning order of the optical scanning unit when generating the processing position data different from a scanning order of the optical scanning unit when performing the processing.

9. A control method of controlling a laser processing device including an optical scanning unit that scans laser light and a condenser lens that condenses the laser light onto a workpiece, the control method comprising:
causing the optical scanning unit to scan the laser light, and generating processing position data for the laser light for processing the workpiece on the basis of a detection result of a plasma light sensor detecting plasma light from the workpiece; and
controlling the laser processing device on the basis of the processing position data.

10. A non-transitory computer-readable storage medium storing a computer program to generate data for a laser processing device configured to have an optical scanning unit that scans laser light, and a condenser lens that condenses the laser light onto a workpiece,
wherein the computer program comprises instructions for executing following processes:
causing the optical scanning unit to scan the laser light, and generating processing position data for the laser light for processing the workpiece on the basis of a detection result of a plasma light sensor detecting plasma light from the workpiece.

11. A product manufacturing method of controlling a laser processing device including an optical scanning unit that scans laser light and a condenser lens that condenses the laser light onto a workpiece, to manufacture a product, the product manufacturing method comprising:
causing the optical scanning unit to scan the laser light, and generating processing position data for the laser light for processing the workpiece on the basis of a detection result of a plasma light sensor detecting plasma light from the workpiece;
controlling the laser processing device on the basis of the processing position data to process the workpiece; and
manufacturing a product from the workpiece processed through the processing.
